# EUROPÄISCHE PATENTANMELDUNG

(11) **EP 1 014 494 A1**
(43) Veröffentlichungstag der Anmeldung: **28.06.2000**
(21) Anmeldenummer: 99811131.4
(22) Anmeldetag: 10.12.1999
(51) Int. Cl.: H01R 4/30, H01R 4/64, H01R 25/16, H01R 4/26

(54) **Verfahren zum Verbinden von metallischen Stromleitern und nach dem Verfahren hergestellte Stromschienen-Verbindung**

(30) Priorität: 16.12.1998 CH 248698
(71) Anmelder: ZURECON AG, CH-8003 Zürich (CH)
(72) Erfinder: Gerster, Max, Dr. oec., 8185 Winkel (CH)
(74) Vertreter: Kägi, Otto Patentanwalt

(57) **Zusammenfassung**

Das Verfahren dient zum Verbinden von metallischen Stromleitern (1a, 1b), z.B. Flachprofilen, insbesondere aus Aluminium, auch für Aluminium-Kupfer-Verbindungen. Einander gegenüberliegende Kontaktflächen (3) werden vorbereitend mit Rillen (4), Zacken o.dgl. versehen. Bei der Montage werden die Kontaktflächen (3) in unmittelbare Berührung gebracht und die Stromleiter mit so grosser Kraft zusammengepresst, dass an den Kontaktflächen eine plastische Verformung und dadurch ein metallischer, elektrisch leitender Kontakt an einer Vielzahl von Stellen entsteht. Die plastische Verformung bewirkt ein Aufbrechen oder Absplittern von an den Kontaktflächen vorhandenen Oxidschichten, wodurch blankes Metall zur Kontaktbildung freigelegt wird. Die Press-kraft kann mittels Spannschrauben (in Bohrungen 2) erzeugt werden, die z.B. direkt durch die Kontaktflächen (3) hindurchgehen. - Eine Verbindung von Stromschienen-Abschnitten mit mehreren parallelen Stromleitern wird ebenfalls beschrieben.

## Beschreibung

Die Erfindung betrifft ein Verfahren zum Verbinden von Stromleitern über je eine Kontaktfläche, wobei die Kontaktflächen einander gegenüberliegend zusammengefügt werden. Ferner betrifft die Erfindung eine Stromschienen-Verbindung, die nach diesem Verfahren hergestellt ist.

Eine typische Anwendung des Verfahrens ergibt sich bei sogenannten Stromschienen (auch Schienenverteiler genannt), die zur Energieversorgung von Maschinen, Klima- und Beleuchtungsanlagen usw. dienen und zur Führung von elektrischen Strömen von mehreren 100 A geeignet sind. Solche Stromschienen enthalten mehrere parallel geführte, isolierte Stromleiter in Form von massiven Flachprofilen aus Kupfer oder Aluminium. Sie werden als Einzelelemente, z.B. gerade oder winkelförmige Abschnitte, als Verzweigungen, oder mit seitlich abzweigenden Anschlüssen usw. hergestellt. Solche Elemente werden dann, oft längere Zeit nach der Herstellung, zu einer Anlage zusammengefügt. Dabei sind die Enden der Stromleiter am Ort der Montage miteinander mechanisch sowie elektrisch leitend zu verbinden. Dabei kommen praktisch nur Pressverbindungen zwischen überlappenden Kontaktflächen - z.B. mittels Verschraubung - in Frage; ein Verschweissen der Stromleiter an Ort und Stelle bei der Stromschienen-Montage wäre dagegen sehr kostspielig und wäre auch aus Sicherheitsgründen kaum zulässig.

Das Verbinden von massiven Stromleitern aus Kupfer bereitet in der Regel keine Schwierigkeiten. Es werden jedoch aus Kostengründen vermehrt auch Stromleiter aus Aluminium verwendet. Auf diesem Metall entsteht bekanntlich bereits nach kurzer Zeit eine dichte Schicht aus hartem, sprödem Aluminiumoxid, die ausgesprochen schlecht leitet. Ohne besondere Massnahmen wären deshalb mechanische (Press-)Verbindungen zwischen Aluminiumleitern wie auch Aluminium-Kupfer-Verbindungen mit hohen elektrischen Übergangswiderständen behaftet, die z.B. bei Stromschienen wie auch anderweitig nicht tolerierbar wären.

Eine Möglichkeit zur Abhilfe besteht darin, die Kontaktflächen unmittelbar vor dem Zusammenfügen der Leiter, also am Ort der Montage, blank zu bürsten. Dies ist allerdings sehr zeitraubend und umständlich, weil die Kontaktflächen an den Enden der Stromschienen-Elemente oft nur schwer zugänglich sind. Auch ist der Erfolg der Massnahme stark von sorgfältiger Arbeit abhängig, die genau kontrolliert werden muss. - Zur Vermeidung störender Oxidschichten bzw. Gewährleistung blanker Kontaktflächen mit geringem Übergangswiderstand ist es bekannt, Stromleiter aus Aluminium im Verbindungsbereich mit einem Überzug aus Nickel, Zinn oder Silber zu versehen. Dieser Arbeitsgang ist allerdings mit zusätzlichem Aufwand und entsprechenden Kosten verbunden, was die Stromschienen-Elemente erheblich verteuert.

Ferner ist es bekannt, bei der Verbindungsherstellung besondere konstruktive Elemente zwischen die Kontaktflächen der Stromleiter zwecks besserer Kontaktierung einzufügen: Gemäss US-Patent-schrift Nr. 3,895,853 handelt es sich um federnde, gewellte Metallstreifen, die beidseits vorstehende Lamellen bilden. In der CH-Patentschrift Nr. 551 698 wird dagegen ein um eine Spannschraube herum angeordneter Ring vorgeschlagen, der auf jeder Stirnseite eine kreisförmige, scharfe Kante bildet; beim Festziehen der Schraube wird jede dieser Kanten in eine der Kontaktflächen eingedrückt. Diese Vorschläge erfordern einerseits zusätzliche mechanische Teile, die entsprechende Herstellkosten verursachen und die Montage erheblich komplizieren und verteuern. Die eingefügten Teile bedingen sodann einen entsprechenden Abstand zwischen den Kontaktflächen. Die Verbindung braucht entsprechend mehr Platz, was insbesondere bei Stromschienen-Elementen mit ihren Mehrfachleitern und "paketweise" nebeneinanderliegenden Verbindungsstellen erheblich ins Gewicht fällt. Schliesslich ist nachteilig, dass kein direkter Kontakt zwischen den Stromleitern gebildet wird, sondern zwei Stromübergänge in Serie mit entsprechend erhöhtem Übergangswiderstand entstehen.

Mit der Erfindung soll deshalb ein einfach durchzuführendes, kostengünstiges Verfahren vorgeschlagen werden, das bei Verwendung von Stromleitern insbesondere aus Aluminium auch nach längerer Lagerzeit (Zeit zwischen Herstellung und Montage der Leiter) elektrisch und mechanisch einwandfreie Verbindungen gewährleistet.

Diese Aufgabe wird beim Verfahren der eingangs genannten Art erfindungsgemäss nach dem Patentanspruch 1 dadurch gelöst, dass mindestens die Kontaktfläche des einen Stromleiters vor dem Zusammenfügen mit an der Oberfläche kantigen Rillen, Zacken und/oder Kerben versehen wird, dass die Kontaktflächen zur unmittelbaren Berührung gebracht und die Stromleiter mit so grosser Kraft zusammengepresst werden, dass an den Kontaktflächen eine gegenseitige plastische Verformung und dadurch ein metallischer, elektrisch leitender Kontakt an einer Vielzahl separater Stellen erzeugt wird.

Das vorbereitende Bearbeiten der Kontaktflächen - Erzeugen der Rillen, Zacken etc. - braucht keineswegs unmittelbar vor dem Zusammenfügen der Stromleiter zu erfolgen, vielmehr kann zwischen diesen Verfahrensschritten ein längerer Zeitabschnitt liegen. Es zeigt sich nämlich, dass bei der nachfolgenden Pressung der Stromleiter und resultierender Materialverformung eine inzwischen gebildete, spröde Oxidschicht an den zahlreichen Berührungsstellen aufgebrochen wird und beidseitig absplittert, wobei das blanke Metall freigelegt wird. An den Druckstellen wird das Material fliessend ineinandergepresst, und es ergibt sich der erwünschte, dauerhaft geringe Übergangswiderstand dank einer Vielzahl paralleler metallischer Kontakte. Die vorbereitende Oberflächen-Bearbeitung der Kontaktflächen lässt sich bei der Herstellung der Leiter mit einfachen Werkzeugen kostengünstig durchführen, z.B. mittels eines entsprechend geformten Pressstempels oder spanabhebend mittels einem kammartigen, gezackten Ziehwerkzeug. Besonders vorteilhaft ist, dass beim Zusammenfügen der Leiter keinerlei zusätzlichen Teile benötigt werden und die Kontaktflächen unmittelbar aufeinander liegen. Die Montage gestaltet sich dadurch ausserordentlich einfach. Die grossflächig über die Kontaktflächen verteilten, elektrischen und mechanischen Kontakte kommen zuverlässig und in gleichmässiger Qualität zustande. Selbstverständlich muss eine ausreichende Flächenpressung erzeugt werden, um die plastische Verformung und die gewünschten, geringen Übergangswiderstände an den Druckstellen hervorzurufen; eine entsprechende Presskraft ist aber auch für die stabile mechanische Verbindung ohnehin erforderlich

Eine erfindungsgemässe Stromschienen-Verbindung, die nach dem Verfahren gemäss Patentanspruch 1 hergestellt ist, ist im Anspruch 7 definiert.

Nachstehend wird die Erfindung anhand von Ausführungsbeispielen in Verbindung mit der Zeichnung näher erläutert.
- Fig. 1: zeigt zwei zu verbindende, an ihren Kontaktflächen bearbeitete Stromleiter vor dem Zusammenfügen,
- Fig. 2: zeigt die miteinander verbundenen Stromleiter, jedoch ohne Spannorgane zum Erzeugen einer Presskraft an den Kontaktflächen,
- Fig. 3: zeigt dieselben Stromleiter, zusammengehalten mitttels Spannschraube und Mutter,
- Fig. 4: stellt einen einzelnen Stromleiter dar, dessen Kontaktfläche gemäss einer Variante bearbeitet ist, und
- Fig. 5: zeigt ein Beispiel einer Verbindung zweier Stromschienenabschnitte mit je mehreren Stromleitern.

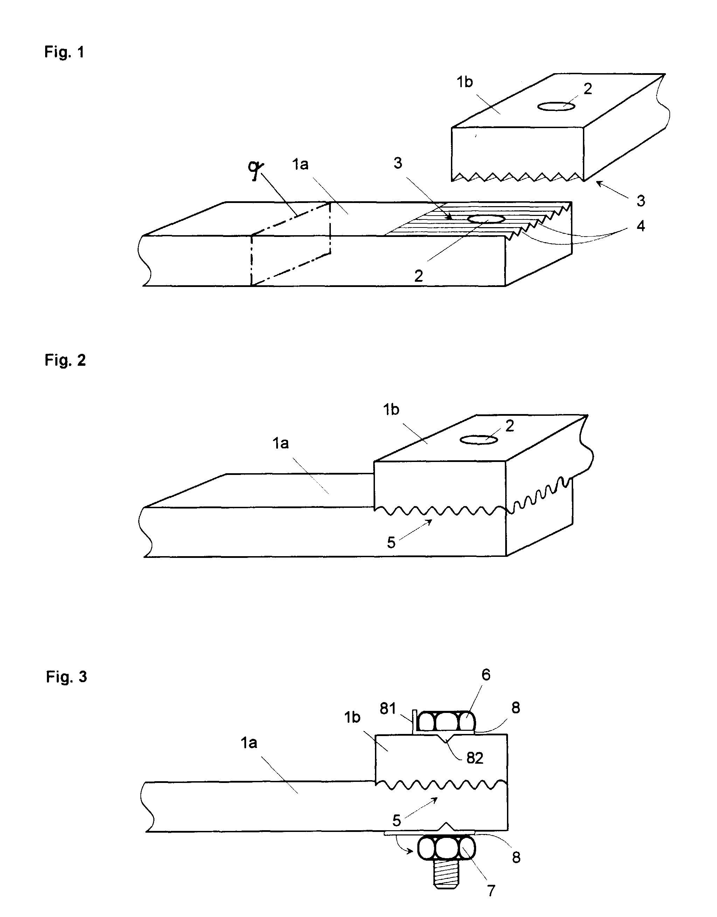

Die Fig. 1 zeigt perspektivisch zwei Stromleiter 1a und 1b in Form von Flachprofilen, z.B. aus Aluminium, die über Kontaktflächen 3 elektrisch leitend zu verbinden sind. Die Kontaktflächen 3 in den Endbereichen der beiden Stromleiter sind mit einer Vielzahl von Rillen 4 o. dgl. versehen, die an der Oberfläche (d.h. in der Ebene der Flächen 3) scharfkantig sind. Ausserdem weisen die Stromleiter 1a und 1b je eine vorzugsweise durch die Kontaktflächen 3 verlaufende Durchgangsbohrung 2 für die Aufnahme einer Spannschraube 6 (Fig. 3) auf.

Die so vorbereiteten Stromleiter können entweder sogleich nach der Bearbeitung oder auch nach längerer Lagerzeit miteinander verbunden werden. Eine auf der Oberfläche bzw. auf den Kontaktflächen 3 entstandene Oxidschicht hat auf die Qualität der beim Verbinden gebildeten elektrischen Kontaktstellen keinen Einfluss. Zum Herstellen der Verbindung werden die Stromleiter la, 1b so zusammengefügt, dass ihre Kontaktflächen 3 einander unmittelbar berühren. Danach werden die Stromleiter mit so grosser Kraft gegeneinander gepresst, dass an den Kontaktflächen eine gegenseitige plastische Verformung auftritt. Dadurch wird an einer Vielzahl von über die Kontaktflächen verteilten Stellen ein metallischer, elektrisch leitender Kontakt erzeugt.

Die Fig. 2 zeigt schematisch den Zustand bei hergestellter Verbindung der Stromleiter 1a und 1b (die Spannschraube ist hier zwecks besserer Übersicht nicht dargestellt). Mit der äusseren, gewellten Trennlinie 5 zwischen den Stromleitern ist die an den Kontaktflächen infolge der Presskraft eingetretene plastische Verformung angedeutet. Bei Verbindungen dieser Art wird in aller Regel die Ausdehnung der Kontaktflächen 3 wesentlich grösser gewählt als der Leitungsquerschnitt der Stromleiter (Querschnitt q der Flachprofile, in Fig. 1 strichpunktiert angedeutet). Dank der grossen Zahl der über die Kontaktflächen verteilten, metallischen Kontakte kann somit erreicht werden, dass der elektrische Übergangswiderstand der Verbindung relativ sehr niedrig ist.

Beim vorliegenden Beispiel wird zur Erzeugung der erforderlichen Presskraft gemäss Fig. 3 eine Spannschraube 6 mit Mutter 7 verwendet. Bei Einzelverbindungen kann zweckmässigerweise die Spannschraube 6 (bzw.die die Schraube aufnehmende Bohrung 2) direkt durch die Kontaktflächen 3 hindurch geführt werden.

Fig. 3 zeigt die vollständige, elektrische und mechanische Verbindung mit Schraube 6 und Mutter 7 in Seitenansicht. Anstelle von herkömmlichen Unterlagscheiben unter dem Schraubenkopf und der Mutter sind hier spezielle Scheiben 8 verwendet, die als Schraubensicherung dienen. Diese Scheiben 8 weisen einen seitlichen Sicherungslappen 81 sowie an der dem Stromleiter 1a, 1b zugekehrten Fläche einen Dorn (oder eine Zacke) 82 auf. Beim Festziehen der Schraube und der Mutter dringt der Dorn 82 in das Leitermaterial ein und verhindert ein Verdrehen der Scheibe 8. Anschliessend wird an beiden Scheiben 8 der Lappen 81 zum Schraubenkopf bzw. zur Mutter hin abgebogen (unten in Fig. 3 angedeutet), wodurch die Schraubenverbindung gegen nachträgliches Lockern gesichert ist.

Die von der Schraubenverbindung erzeugte Presskraft muss so gross sein, dass an den Kontaktflächen 3 bzw. an den Kanten der Rillen 4 o. dgl. die oben erwähnte plastische Verformung und damit die metallischen Kontakte erzeugt werden. Dies wird im allgemeinen mit einer Presskraft erreicht, wie sie auch für eine stabile mechanische Verbindung der Stromleiter ohnehin erforderlich ist. Um gleichmässige Ergebnisse zu gewährleisten, kann zweckmässigerweise zum Festziehen der Schrauben ein Drehmomentschlüssel verwendet werden.

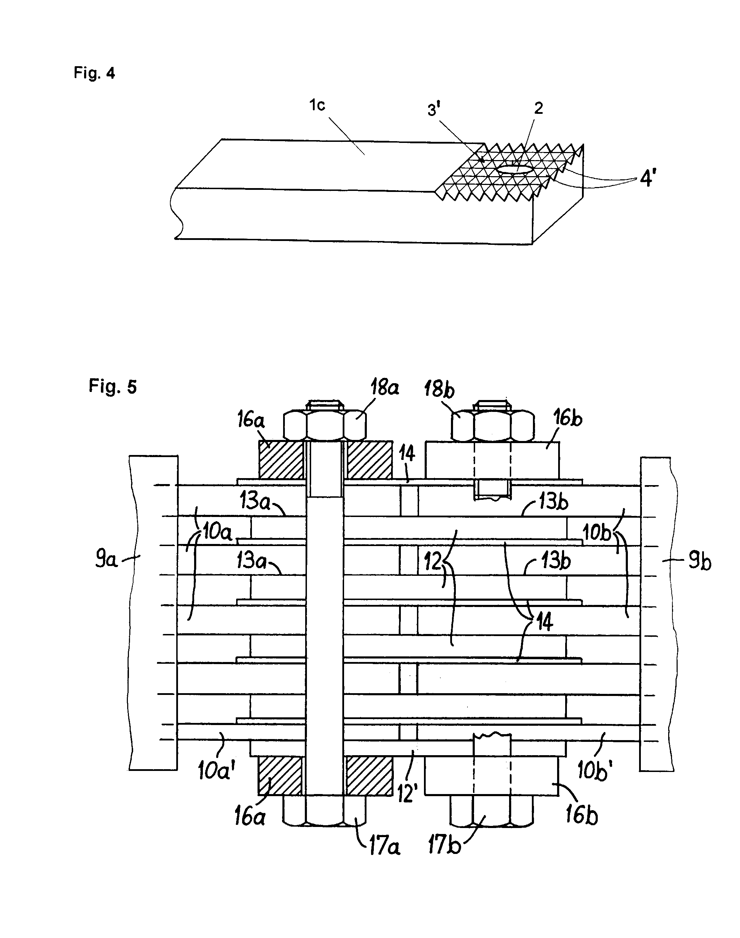

Die Kontaktflächen der Stromleiter können anstatt mit den in Fig. 1 dargestellten, parallelen Rillen 4 auch auf andere Weise für die Verbindung vorbereitet werden. Fig 4 zeigt als Variante einen Stromleiter 1c, dessen Kontaktfläche 3' eine Vielzahl von Zacken 4' aufweist. Denkbar sind auch regelmässig oder unregelmassig angebrachte Kerben oder eine Kombination verschiedener solcher an der Oberfläche kantiger Formen, die bei ausreichender Presskraft plastisch verformt werden. Es hat sich gezeigt, dass eine relativ feine Bearbeitung von geringer Tiefe bereits ausreicht, beispielsweise können parallele Rillen 4 gemäss Fig. 1 mit einer Teilung (Abstand) und Tiefe von wenigen Zehntel Millimeter ausgeführt werden.

Anlässlich der Fertigung der Strom-leiter kann eine entsprechende Bearbeitung der Kontaktflächen z.B. mittels eines Pressstempels durchgeführt werden oder vorzugsweise spanabhebend durch Fräsen oder mittels eines gezackten Zieh- oder Schabwerkzeugs. Gegebenenfalls genügt es, wenn nur die Kontaktfläche am einen der beiden zu verbindenden Stromleiter bearbeitet wird, z.B. im Falle der Verbindung von Aluminium- mit Kupferleitern, wobei dann zweckmässigerweise die Aluminium-Kontaktfläche die bearbeitete Fläche ist.

In Fig. 5 ist als weiteres Ausführungsbeispiel eine Verbindung zweier Stromschienenabschnitte 9a und 9b dargestellt. Es handelt sich um ein Stromschienen-System mit mehreren - im vorliegenden Fall vier - Phasenleitern 10a bzw. 10b und einem Schutzleiter 10a' bzw. 10b'. Die flachprofilförmigen Stromleiter 10a, 10a' bzw. 10b, 10b' der Abschnitte sind in an sich bekannter Weise z.B. in einer Isoliermasse eingegossen, wobei ihre zu verbindenden Enden freiliegen. Vor dem Eingiessen werden die Strom-leiter einzeln abgelängt und vollständig mechanisch bearbeitet, insbesondere werden sie an ihren Kontaktflächen 13a bzw. 13b mit geeigneten Rillen, Zacken o.dgl. versehen, wie weiter oben beschrieben (in Fig. 5 nicht weiter dargestellt).

Zum Verbinden der vorbereiteten Abschnitte 9a und 9b werden sie gemäss Fig. 5 einander gegenübergestellt, sodass die Stromleiter paarweise aufeinander ausgerichtet sind. Hierauf werden wie dargestellt metallische, leitende Zwischenplatten 12, 12' - als verbindende Stromleiter - sowie Isolierplatten 14 eingefügt.

Jede Zwischenplatte überlappt jeweils die Enden eines Leiterpaars 10a, 10b bzw. 10a', 10b', wobei die Platten 12, 12' an ihren den Stromleitern zugekehrten Kontaktflächen vorzugsweise ebenfalls Rillen o.dgl. aufweisen. Die Isolierplatten 14 sollen allseitig über die Zwischenplatten 12, 12' bzw. (in der Breite) über die Stromleiter vorstehen.

Zur Erzeugung der Presskraft an dem so geschichteten "Paket" zwecks elektrischer und mechanischer Verbindung der Stromschienenabschnitte 9a und 9b dienen Spannorgane, gebildet aus Spannschrauben 17a, 17b und Muttern 18a, 18b sowie Jochplatten 16a, 16b. Jedem Abschnitt 9a und 9b ist ein eigenes solches Spannorgan im Bereich seiner Kontaktflächen 13a bzw. 13b zugeordnet: Jeweils zwei gegenüberliegende Jochplatten sind durch zwei Schrauben verbunden, die seitlich neben den Stromleitern, Zwischenplatten und Isolierplatten verlaufen. Die elektrischen und mechanischen Verbindungen an den Kontaktflächen 13a und 13b kommen durch Festziehen der Spannschrauben bzw. Muttern auf grundsätzlich gleiche Weise zustande wie weiter oben anhand der Beispiele nach Fig. 1 bis 4 beschrieben.

Verbindungsbereiche von Stromschienenabschnitten nach Fig. 5 (sogenannte Kupplungen) werden üblicherweise, wie an sich bekannt, von einem Gehäuse umgeben und können je nach Erfordernis umgossen werden, z.B. mittels Giessharz auf Polymer- oder Epoxydbasis.

Stromschienen-Verbindungen gemäss Fig. 5 eignen sich vorwiegend für Systeme mit Stromleitern aus Aluminium, es können jedoch auf gleiche Art auch Verbindungen zwischen Abschnitten mit Aluminiumleitern und solchen mit Kupferleitern hergestellt werden. Es ist auch möglich, nur die Zwischenplatten 12, 12' und nicht auch die Stromleiter der Abschnitte 9a, 9b an den Kontaktflächen mit Rillen o.dgl. zu versehen. Das Verfahren ist selbstverständlich auf verschiedenartig geformte Stromschienen-Elemente anwendbar, wie gerade Abschnitte, Winkel-Elemente, Z-Elemente, Anschluss-Elemente (mit Stromabzweigungen) usw.

## Patentansprüche

1. Verfahren zum Verbinden von metallischen Stromleitern (1, 10, 12) über je eine Kontaktfläche (3, 13), wobei die Kontaktflächen einander gegenüberliegend zusammengefügt werden, dadurch **gekennzeichnet**, dass mindestens die Kontaktfläche (3, 13) des einen Stromleiters (1, 10, 12) vor dem Zusammenfügen mit an der Oberfläche kantigen Rillen, Zacken und/oder Kerben (4) versehen wird, dass die Kontaktflächen zur unmittelbaren Berührung gebracht und die Stromleiter mit so grosser Kraft zusammengepresst werden, dass an den Kontaktflächen eine gegenseitige plastische Verformung (5) und dadurch ein metallischer, elektrisch leitender Kontakt an einer Vielzahl separater Stellen erzeugt wird.

2. Verfahren nach Anspruch 1, dadurch gekennzeichnet, dass die Rillen, Zacken und/oder Kerben (4) auf den Kontaktflächen (3, 13) regelmässig verteilt angeordnet werden.

3. Verfahren nach Anspruch 1, dadurch gekennzeichnet, dass zur Erzeugung der Presskraft Spannschrauben (6, 17) verwendet werden.

4. Verfahren nach Anspruch 3, dadurch gekennzeichnet, dass Spannschrauben (6) und diese aufnehmende Bohrungen (2) direkt durch die Kontaktflächen (3) hindurch geführt werden.

5. Verfahren nach Anspruch 3, dadurch gekennzeichnet, dass Spannschrauben (17) paarweise ausserhalb der Kontaktflächen (13) angeordnet werden und die Presskraft mittels Jochplatten (16) auf die Stromleiter (10, 12) übertragen.

6. Verfahren nach Anspruch 3, dadurch gekennzeichnet, dass zum Einstellen der Presskraft beim Festziehen der Spannschrauben bzw. Schraubenmuttern ein Drehmomentschlüssel verwendet wird.

7. Stromschienen-Verbindung, die nach dem Verfahren gemäss einem der Ansprüche 1 bis 6 hergestellt ist, wobei die Presskraft zwischen den verbundenen Stromleiterpaaren (1a, 1b; 10, 12) mittels Spannschrauben (6, 17) erzeugt ist und wobei wenigstens die einen der miteinander verbundenen Stromleiter (1, 10) aus Aluminium bestehen,
dadurch **gekennzeichnet**, dass von jeweils zwei einander unmittelbar berührenden Kontaktflächen (3, 13) mindestens die eine mit Rillen, Zacken und/oder Kerben (4) versehen ist und dass diese Kontaktflächen infolge der Presskraft der Spannschrauben (6, 17) eine plastische Verformung aufweisen.

8. Stromschienen-Verbindung nach Anspruch 7, dadurch gekennzeichnet, dass Spannschrauben (6) in ihren Bohrungen (2) direkt durch die Kontaktflächen hindurch geführt sind.

9. Stromschienen-Verbindung nach Anspruch 7, gekennzeichnet durch zwei Stromschienenabschnitte (9a, 9b) mit je mehreren Stromleitern (10a, 10a', 10b, 10b'), wobei je einander entsprechende Stromleiter der beiden Stromschienenabschnitte (9a, 9b) aufeinander ausgerichtet und mittels einer Zwischenplatte (12), die entsprechende Kontaktflächen (13a, 13b) aufweist, verbunden sind, und wobei den Stromleitern (10a) des einen Stromschienenabschnittes (9a) mit zugehörigen Kontaktflächen (13a) und den Stromleitern (10b) des andern Stromschienenabschnittes (10b) mit zugehörigen Kontaktflächen (13b) je eigene Spannorgane (16a, 17a, 18a bzw. 16b, 17b, 18b) zugeordnet sind.
